Europäisches Patentamt

European Patent Office

Office européen des brevets

(19)

(11) Publication number: **0 293 317 B1**

# EUROPEAN PATENT SPECIFICATION

(45) Date of publication of patent specification: **16.09.92**  (51) Int. Cl.⁵: **B60C 29/02**, B60C 17/00

(21) Application number: **88500051.3**

(22) Date of filing: **26.05.88**

(54) Safety device for pneumatic tyres.

(30) Priority: **28.05.87 ES 8701568**

(43) Date of publication of application:
**30.11.88 Bulletin 88/48**

(45) Publication of the grant of the patent:
**16.09.92 Bulletin 92/38**

(84) Designated Contracting States:
**AT BE CH DE FR GB GR IT LI LU NL SE**

(56) References cited:
**DE-A- 2 417 806          FR-A- 820 974
GB-A- 818 848            US-A- 2 145 218
US-A- 2 998 044          US-A- 3 087 529**

(73) Proprietor: **Gonzalez Perez, Alberto José
San Ignacio, 5
Montcada I Reixac (Barcelona)(ES)**

(72) Inventor: **Gonzalez Perez, Alberto José
San Ignacio, 5
Montcada I Reixac (Barcelona)(ES)**

(74) Representative: **Pastells Teixido, Manuel
c/o PASTELLS TEIXIDO, S.L. Pau Claris 138,
5-1a
E-08009 Barcelona(ES)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a safety device for vehicle pneumatic tyres, these tyres being made up with inner tube casings.

As is known, a large number of traffic accidents are caused by punctures of tubed tyres in automobiles, caused by the insertion of nails or other sharp edged bodies causing the sudden release of the pressurized air contained in the inner tube forming part of the tyre.

Such effects may be avoided or at least mitigated by preventing the sudden release of the air from the inner tube, in such a way that, although the latter is perforated, the air is retained in the inner tube itself and in the space formed between the casing and the wheel rim. Already known are devices tending to avoid the release of the air leaking from a punctured inner tube, by retaining it at least for a certain length of time in the space comprised between the casing and the rim.

In these devices it was contemplated to seal the space in question, which in tubed tyres is open in the area where the inflating valve extends outwardly from the rim. At this point there is an orifice through which the valve body may freely pass, so as to provide access to the valve for inflating the tyre and by eliminating the clearance between the orifice edge and the valve, the intermediate space between casing and rim will be closed.

Among these devices can be cited the one being the object of Patent GB-A-818 848 which for the sealing of the space between the pneumatic tyre and the rim comprises a resilient seal independently strung on the valve metallic body and by means of the pressure from a washer-bushing, goes to fill up said space preventing the air passage and providing in this way this area sealing. Said pressure is provided by a screwed nut on the valve body and is transmitted to the resilient seal by the washer-bushing strung on said body.

The device being the object of this invention improves this type of devices by providing a higher and more reliable sealing effect.

All that is achieved by making up an extension in the rim hole for a valve passage and determining a neck member on which internal walls is resting the resilient seal showing an analogous shape to said neck member, this valve being fixed with a second retaining valve screwed thereon. With this device the own air pneumatic tyre pressure presses the resilient seal against the neck member, the sealing being thus increased, thereby being also benefited by the existence of a remarkable contacting area between the resilient seal and the neck member.

To facilitate the explanation, the present specification is accompanied by a detailed description illustrated with drawings of one embodiment, given only as a non-limiting example of the scope of the invention.

In the drawings:

Figure 1 is a cross section view of the engagement of a tubed tyre with an automobile wheel rim, comprising a preferred embodiment of the inventive device.

Figure 2 is a view of a valve of a tyre inner tube and one of the members of the device fitted thereto to ensure airtightness.

Figures 3 and 4 are respective cross section views similar to Figure 1 of a further two embodiments of the sealing device for the rim-inner tube space of an automobile wheel.

The metal rim 1, carrying the tyre casing 2 and holding it by the edges 3 and 4 thereof in practically airtight engagement, defines between it and the inner tube 5 the space 6 which shrinks when the inner tube is inflated, but which is in communication with the outside environment through the orifice of the valve hole neck member 7, through which the valve 8 extends outwardly to allow the tyre to be inflated.

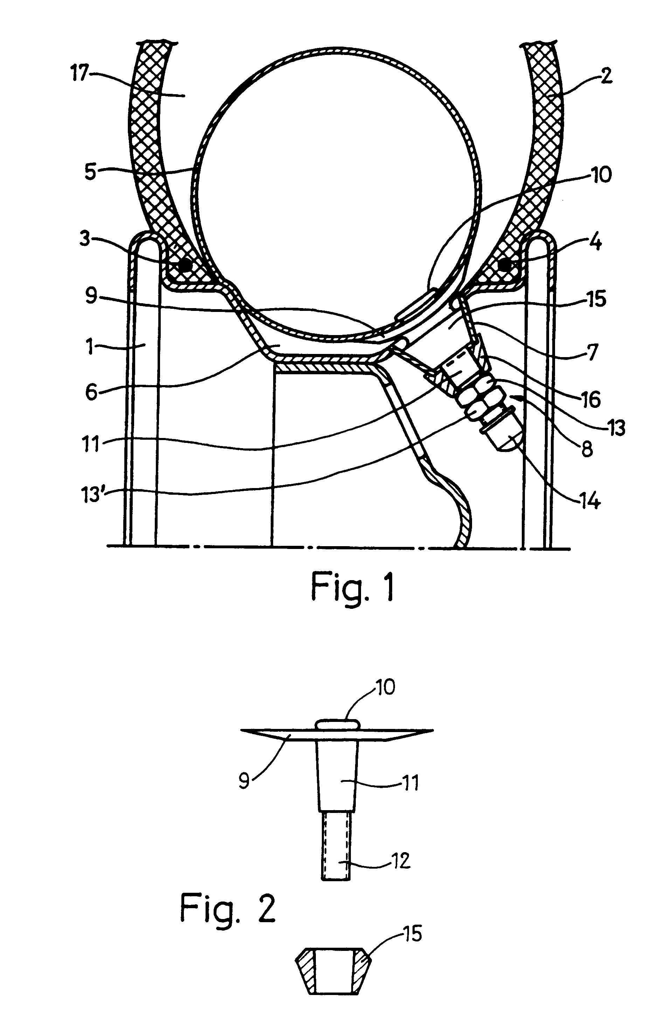

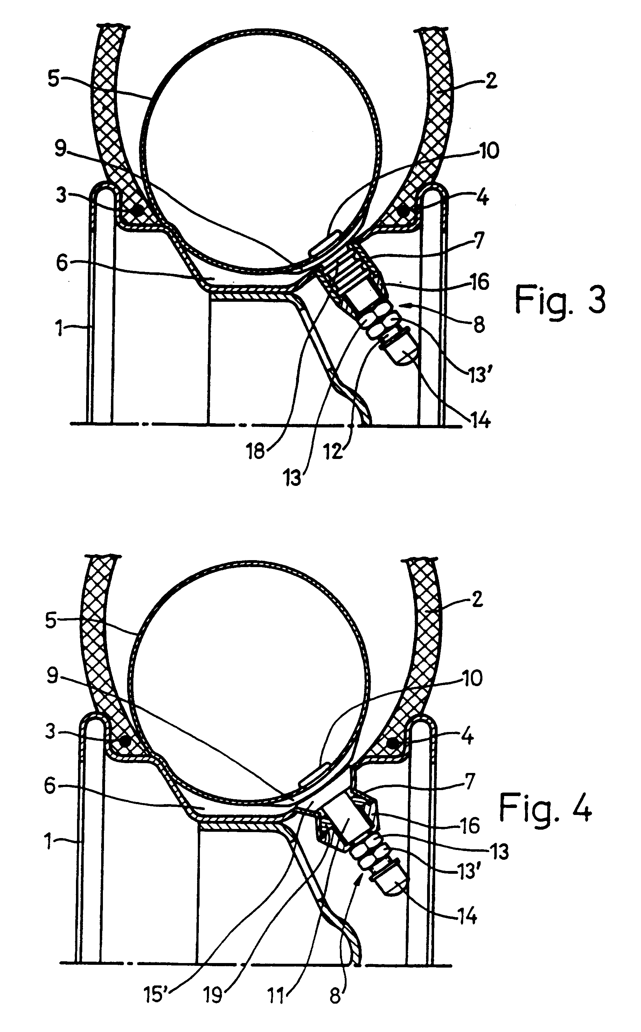

The valve conventionally comprises the resilient crown member 9 fixedly attached to the outside of the inner tube around an orifice in the sidewall thereof, the flange 10 which internally surrounds the said orifice, a frustoconical (as shown in Figure 2) or cylindrical (as shown in Figures 3 and 4) body 11 and the threaded end 12, to which locknuts 13 and 13' and possibly a dust cap 14 are fitted.

A feature of the present invention is that the use of a resilient component 15 exhibited a external shape adapted to the form of the valve hole neck member 7 of the rim. Said component may comprise a bushing having a slightly frustoconical or cylindrical internal shape, for press fitting to the shape of the valve body 11. Nevertheless, as seen in Figure 1, which shows also the use of a bushing 16, located between the valve hole neck member 7 and the nuts 13, and 13' to compensate for possible differences in the threaded portion of the valve, the component 15 will preferably be integral with the body 11.

Under these conditions, when the inner tube 5 is inflated, it fills the space 6 and the valve, with component 15, is pressed against its seat defined by the valve hole neck member 7. The component 15 is made from a resilient material, such as rubber, whereby it provides a perfect seal for said portion.

The valve hole neck member 7 on the rim may be tapered inversely to the way shown in Figure 1, i.e. it may flare outwardly. The component 15 is adapted thereto in the same way as explained, although in this case it requires the use of a crown member, which is pressed by the nuts and in turn presses the component 15 against its seat made up with the valve hole neck member 7.

If the casing and the inner tube 5 are punctured, the air will leak out from the inner tube through the puncture itself into the space 17 formed between the casing and the inner tube and the space 6 defined by the inner tube and the rim and since the latter space is virtually sealed by the seal defined in the valve area, the air will remain in the casing, from which it will leak out relatively slowly through the puncture. Thus, in the absence of a rapid escape of the air, the driver of the affected vehicle has time to react, retaining control of the steering and avoiding a possible accident caused by running off the road or colliding with another vehicle.

In the embodiment of the device illustrated in Figure 3, the valve hole neck member 7 is cylindrical, the same as the component applied to the body of the valve 8, which is tubular and is provided externally with a plurality of annular segments 18 which rub against the inside walls of the said neck member 7. At the end of the neck, the bushing 16 aids in the sealing effect and the nuts 13 and 13' are screwed up thereagainst.

In the Figure 4 embodiment, the valve hole neck member 7 extending from the rim has a double taper, with two oppositely directed portions connected by the smaller diameter ends thereof. In this case, a member 15' of resilient material is used, having a frustoconical shape similar to the previously mentioned component 15, engaging the crown member 9 and seating on the first portion of the valve hole neck member, followed by another resilient member 19 having the form of a frustoconical crown, seated on the second portion of the neck member, and on the outer edges thereof there is disposed the rigid bushing 16, against which the nuts 13 and 13' are applied. The members 15' and 19 compensate for the diameter difference between the double taper neck member and the cylindrical valve body.

With the use of the device described, a tubed tyre takes on the advantages of a tubeless tyre, with the performance and functional security of the latter. In case of a puncture, the air can only escape through the hole in the casing, that is, slowly, whereby the deflation will be slow and will give time to correct the effects of the loss of steering stability which occurs when the tyre internal pressure drops.

This device also allows advantage to be taken of tubeless tyres which have already had several punctures and which are difficult to repair with safety, by using them with an inner tube.

The resilient sealing members which are independent of the inflation valve, such as the component 15 of Figure 2 and member 19 of Figure 4 may be replaced, for example in case of deterioration.

To remove any air which is contained during inflation of the tyre between the casing, the inner tube and the rim, the device is fitted in its functional place and the tyre is inflated. When the air pressure reaches a certain level, such that the inner tube is pressing against the casing, the device is manually pressed inwardly allowing all the air to blow out. Once this has been done, the inner tube is fully inflated and adopts the final sealing position in the valve area.

## Claims

1. Safety device for pneumatic tyres comprising a casing (2) and inner tube (5) and having a closing resilient seal (15) for the air space comprised between the inner tube (5) and the wheel rim (1), said resilient seal being of independent construction and surrounding the metallic body of the inflation valve (8) in the form of a bushing which remains seated on the hole existing in the rim for the passage of the valve, the assembly being completed by means of a bushing (16) applied externally to the valve and retained by a nut (13) screwed on the outside of the valve (8) characterized in that the valve hole has a neck member (7) formed in the rim for the passage of the valve (8), such that the resilient seal member (15) seats on its internal walls, and that a second retaining nut (13) is screwed on the outside of the valve.

2. Safety device for pneumatic tyres, according to claim 1, wherein the valve hole neck member (7) is conical and the resilient seal member (15) is also conical in association with the neck member (7) conical shape.

3. Safety device for pneumatic tyres, according to claim 1, wherein the neck member (7) is cylindrical and the resilient seal member (15) exhibits an arrangement also cylindrical and provided with external annular segments (18).

4. Safety device for pneumatic tyres, according to claim 1, wherein the neck member (7) has a double taper with two portions connected by the smaller diameter ends thereof, housing the frustoconical resilient seal member (15') in the radially external portion and another frustoconical resilient member (19) in the radially internal portion of the neck member (7).

## Patentansprüche

1.  Sicherheitsvorrichtung für Luftreifen, bestehend aus einem Gehäuse (2) und einem inneren Schlauch (5) mit einem elastischen Dichtverschluss (15) für den Luftraum zwischen dem inneren Schlauch (5) und der Radfelge (1), wobei dieser elastische Dichtverschluss separat hergestellt wird und den Metallkörper des Luftventils (8) nach Art einer Manschette umgibt, die auf der im Reifenrand zum Durchgang des Ventils befindlichen Öffnung aufsitzt, wobei die Baugruppe durch eine Manschette (16) vervollständigt wird, die von aussen her auf das Ventil aufgesetzt und durch eine auf den äusseren Teil des Ventils (8) aufgeschraubte Mutter (13) gehalten wird, dadurch gekennzeichnet, dass die Ventilöffnung für den Durchgang des Ventils in der Radfelge ein Halsstück (7) trägt, auf dessen Innenwänden der elastische Dichtverschluss (15) aufsitzt, und dass eine zweite Haltemutter (13) auf den äusseren Teil des Ventils aufgeschraubt ist.

2.  Sicherheitsvorrichtung für Luftreifen nach Anspruch 1, bei der das Halsstück (7) konisch ausgeführt ist und der elastische Dichtverschluss (15) in Verbindung mit der konischen Ausführung des Halsstückes (7) eine ebenfalls konische Form aufweist.

3.  Sicherheitsvorrichtung für Luftreifen nach Anspruch 1, bei der das Halsstück (7) zylindrisch ausgeführt ist und der elastische Dichtverschluss (15) einen ebenfalls zylindrischen Aufbau aufweist und mit äusseren Ringsegmenten (18) versehen ist.

4.  Sicherheitsvorrichtung für Luftreifen nach Anspruch 1, bei der das Halsstück (7) eine doppelte Spitze mit zwei Bereichen aufweist, die über deren kleinere Durchmesser angeschlossen ist, wobei der stumpfkonisch ausgeführte elastische Dichtverschluss (15') im radial gesehen äusseren Bereich und ein anderes stumpfkonisch ausgebildetes elastisches Element im radial gesehen inneren Bereich des Halsstückes (7) untergebracht sind.

**Revendications**

1.  Dispositif de sécurité pour pneus comprennent une carcasse (2) et une chambre à air intérieure (5) et ayant un joint de fermeture résilient (15) pour l'espace d'air compris entre la chambre intérieure (5) et la jante de la roue (1), le dit joint résilient étant d'une construction indépendante et entourant le corps métallique de la valve de gonflage (8) sous forme d'une douille appliquée sur le trou qui existe dans la jante pour le passage de la valve, l'ensemble étant complété par une douille (16) appliquée à l'extérieur de la valve et retenue par un écrou (13) vissé sur l'extérieur de la valve (8) caractérisé en ce que le trou de la valve a un membre de cou (7) formé dans la jante pour le passage de la valve (8), de manière à ce que le membre de joint résilient (15) est appliqué sur les parois internes, et qu'un deuxième écrou de retenue (13) est vissé sur l'extérieur de la valve.

2.  Dispositif de sécurité pour pneus, d'après la revendication 1, dans lequel le membre de cou du trou de la valve (7) est conique et le membre de joint résilient (15) est également conique en association avec la forme conique du membre de cou (7).

3.  Dispositif de sécurité pour pneus, d'après la revendication 1, dans lequel le membre de cou (7) est cylindrique et le membre de joint résilient (15) montre une disposition qui est également cylindrique et qui est pourvue de segments externes annulaires (18).

4.  Dispositif de sécurité pour pneus, d'après la revendication 1, dans lequel le membre de cou (7) a un double cône avec deux portions reliées par les extrémités au diamètre plus petit, logeant le membre de joint résilient tronconique (15') dans la portion externe radiale et un autre membre résilient tronconique (19) dans la portion interne radiale du membre de cou (7).

Fig. 1

Fig. 2

Fig. 3

Fig. 4